# EUROPEAN PATENT SPECIFICATION

(11) **EP 3 275 090 B1**
(45) Date of publication and mention of the grant of the patent: **01.05.2019**
(21) Application number: 15712607.9
(22) Date of filing: 25.03.2015
(51) Int. Cl.: H04B 7/04, H01Q 3/26, H01Q 3/28, H01Q 3/30, H01Q 21/22, H04B 7/06, H04L 5/00, H04W 52/14, H04W 52/22, H04W 52/24, H04W 52/32, H04W 52/34, H04W 52/42, H04B 17/24

(54) **SYSTEMS, METHODS AND COMPUTER PROGRAM PRODUCTS FOR OPTIMIZING A WIRELESS CHANNEL BETWEEN A USER EQUIPMENT AND A BASE STATION**
SYSTEME, VERFAHREN UND COMPUTERPROGRAMMPRODUKTE ZUR OPTIMIERUNG EINES DRAHTLOSEN KANALS ZWISCHEN EINEM BENUTZERGERÄT UND EINER BASISSTATION
SYSTÈMES, PROCÉDÉS ET PRODUITS PROGRAMME INFORMATIQUE POUR OPTIMISER UN CANAL SANS FIL ENTRE UN ÉQUIPEMENT UTILISATEUR ET UNE STATION DE BASE

(43) Date of publication of application: 31.01.2018
(73) Proprietor: Sony Corporation, Tokyo 108-0075 (JP)
(72) Inventor: BENGTSSON, Erik, 241 35 Elsöv (SE); EDFORS, Ove, 221 00 Lund (SE)
(74) Representative: Neusser, Sebastian
(86) International application number: PCT/EP2015/056401
(87) International publication number: WO 2016/150498

(56) References cited:
- EP-A2- 2 346 190
- KR-A- 20100 120 256
- US-A1- 2010 285 762

## Description

### BACKGROUND

Antenna diversity refers to using two or more antennas to improve the quality of a wireless link between a base station ("BS") and user equipment ("UE"). When the order (i.e., number of antennas) of a multiple input multiple output ("MIMO") system increases, it may not be as straightforward to select which antenna to use among multiple antennas for optimizing a wireless link or connection between a UE and a BS. The present invention is directed to enabling such a selection.

US 2010/285762 A1 (KO HYUNSOO [KR] ET AL) 11 November 2010 (2010-11-11) discloses a method of transmitting an uplink reference signal in a multiple antenna system is provided. The method includes: transmitting a first sounding reference signal for uplink channel measurement on a first antenna by using at least one power amplifier among a plurality of power amplifiers; and transmitting a second sounding reference signal for uplink channel measurement on a second antenna by using the at least one power amplifier, wherein the first sounding reference signal and the second sounding reference signal are transmitted using different time regions when using one power amplifier, and the first sounding reference signal and the second sounding reference signal are transmitted using different time regions or different frequency regions when using the plurality of power amplifiers.

### BRIEF SUMMARY

The scope of the claimed invention is defined by the subject-matter of the appended claims.

Embodiments of the invention are directed to systems, methods and computer program products for optimizing a wireless channel between a user equipment (UE) and a base station. A method for optimizing a wireless channel between a user equipment and a base station comprises determining a first power level for a first antenna of the UE; determining a second power level for a second antenna of the UE; and transmitting a pilot signal from the first and second antennas substantially simultaneously, wherein the pilot signal is transmitted from the first antenna at the first power level and the pilot signal is transmitted from the second antenna at the second power level.

In some embodiments, the method further comprises determining a first delay for the transmission of the pilot signal from the first antenna; and determining a second delay for the transmission of the pilot signal from the second antenna.

In some embodiments, the UE determines an amplitude balance (or power balance) and a phase offset of the first antenna and the second antenna independently of the BS.

In some embodiments, the UE determines an amplitude balance and a phase offset by monitoring a power setting specified by the BS.

In some embodiments, the UE transmits a first pilot signal using the first antenna and a second pilot signal using the second antenna.

In some embodiments, the BS determines the first power level based on the first pilot signal and the second power level based on the second pilot signal.

In some embodiments, the BS defines the first power level and the second power level for the UE, wherein a total power level specified by the BS is equal to a sum of the first power level and the second power level.

In some embodiments, an apparatus is provided for optimizing a wireless channel between a user equipment and a base station. The apparatus comprises a memory; a processor; and a module stored in the memory, executable by the processor, and configured to: determine a first power level for a first antenna of the UE; determine a second power level for a second antenna of the UE; and transmit a pilot signal from the first and second antennas substantially simultaneously, wherein the pilot signal is transmitted from the first antenna at the first power level and the pilot signal is transmitted from the second antenna at the second power level.

In some embodiments, a computer program product is provided for optimizing a wireless channel between a user equipment and a base station. The computer program product comprises a non-transitory computer-readable medium comprising a set of codes for causing a computer to determine a first power level for a first antenna of the UE; determine a second power level for a second antenna of the UE; and transmit a pilot signal from the first and second antennas substantially simultaneously, wherein the pilot signal is transmitted from the first antenna at the first power level and the pilot signal is transmitted from the second antenna at the second power level.

### BRIEF DESCRIPTION OF THE DRAWINGS

Having thus described embodiments of the invention in general terms, reference will now be made to the accompanying drawings, where:
Figure 1 illustrates an exemplary system environment, in accordance with one embodiment of the present invention;
Figures 2 illustrates exemplary graphs, in accordance with embodiments of the present invention; and
Figure 3 illustrates an exemplary method, in accordance with one embodiment of the present invention.

### DETAILED DESCRIPTION OF EMBODIMENTS OF THE INVENTION

Embodiments of the present invention now may be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure may satisfy applicable legal requirements. Like numbers refer to like elements throughout.

Massive MIMO systems are a popular candidate for future 3GPP (3^{rd} Generation Partnership Project) releases. "Massive" MIMO refers to using multiple antennas (e.g., equal to or greater than a threshold number of antennas) in a MIMO system. An order associated with a MIMO system refers to a number of antennas associated with the MIMO system. The MIMO system includes at least one user equipment ("UE") and at least one base station ("BS"). There is massive research in the area of MIMO systems but UE antenna behavior is overlooked.

Recently, live testing of MuMIMO ("multi-user MIMO") systems has performed worse than expectations. It has been seen that there is larger than expected correlation from the radio channels (also referred to as a wireless link from UEs) to different base stations. This can be explained by the notion that user interaction with the antenna is a dominant contributor to the performance of the antenna. One way to improve the performance is through diversity. Antenna diversity refers to using two or more antennas to improve the quality of a wireless link between the BS and a UE. The present invention is directed to a UE with two or more antennas.

The present invention is not just directed to selecting an antenna at the UE, but also weighting the amount of energy transmitted or received by each UE antenna in order to optimize the transmission channel between the UE and the BS. The present invention weights the amount of energy for each antenna and optimizes the phase for each antenna for optimized channel utilization. The present invention is directed to optimizing a wireless channel between a UE and a BS by weighting the power levels of antennas on the UE. The present invention improves antenna diversity performance and enables open loop optimization by the UE. An open loop is where one or more feedback loops are not present between the output (e.g., the BS or UE) and input (e.g., the UE or BS) of the system.

The present invention is directed to using the same pilot signal or different pilot signals transmitted from multiple antennas of the UE. Both uplink ("UL") and downlink ("DL") channels are determined by pilot signals that need to be transmitted at the beginning of a data frame. The present invention relates to transmitting the same pilot signal from two or more antennas substantially simultaneously. Then, the BS will interpret the two or more antennas as a single antenna and the combined characteristics of the antennas determines the performance of the UE. The present invention enables the UE to change or optimize the power level of each antenna (power ratio) and the relative phase (delay) prior to transmission of the pilot signal.

In some embodiments, a UE transmits the pilot signal from a single antenna, and in such a scenario, the UE increases the power level for that antenna, and decreases the power levels of other antennas. The BS directs energy distribution among the antennas based on the pilot signal. If there is no pilot signal transmitted from an antenna, that antenna will not receive any signal nor will the BS listen to that antenna. Transmitting individual pilot signals for the different antennas will take system resources as the pilot signals are a limited resource. By sending the same pilot signal from multiple antennas of the UE, optimized use of the channel between the UE and the BS is possible if information about the power split between antennas and phase offset of the antennas is available.

The present invention also makes it possible for the UE to send the same pilot signal from different antennas with different power levels and/or different phases. In such a scenario, the same power and phase ratio needs to be applied to the different antennas during both UL and DL modes. The power and phase ratios are already known by the UE when combining signals from both antennas in the UE.

In some embodiments, the UE applies the weighting factor to the antennas with involvement from the BS. In other embodiments, the UE applies the weighting factor to the antennas without any involvement from the BS. For example, the UE can direct some power to a first antenna and a second antenna and evaluate the impact on the UL or DL power levels. By evaluating the impact, the UE determines if the first or second antenna is the better option for pilot transmission and also how to balance the power levels between the antennas.

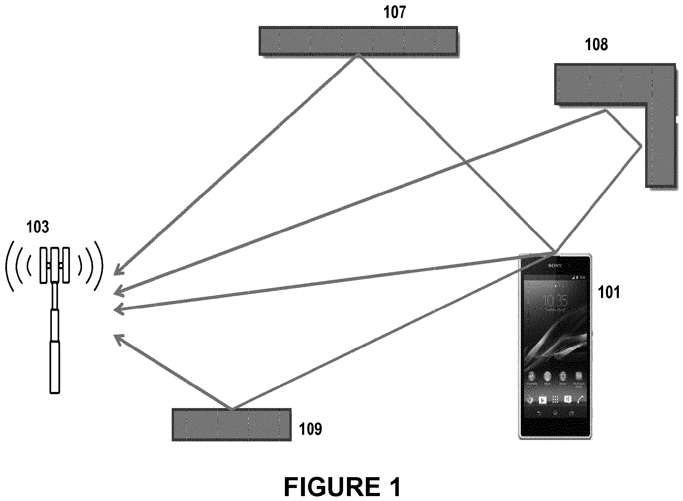

Referring now to Figure 1, Figure 1 presents an exemplary massive MIMO network. In massive MIMO, the device 101 sends out a pilot (or pilot signal) approximately every millisecond that is received at the base station 103. The pilot may be sent out from one or more antennas. In some instances, a first antenna sends a first pilot, a second antenna sends a second pilot, etc. In some instances, the pilot signals transmitted from the device 101 may reflect off of a reflector 107, 108, or 109 prior to being received at the base station 103. As used herein, a pilot signal may also be referred to as just a signal or a signal path.

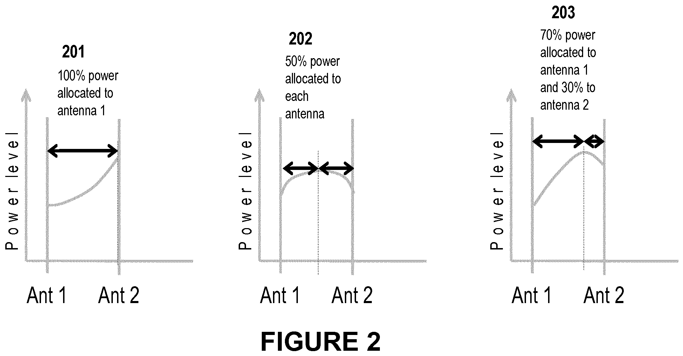

Referring now to Figure 2, Figure 2 presents three graphs 201, 202, and 203. In graph 201, 100% of the power is allocated to the first antenna. In graph 202, 50% of the power is allocated to the first antenna, and 50% of the power is allocated to the second antenna. In graph 203, 70% of the power is allocated to the first antenna, and 30% of the power is allocated to the second antenna. Each of the graphs indicates the power level for UL (i.e., the channel loss). The concept of weighting the antenna power levels for pilot transmission can also be used by the BS in a closed loop where the individual antennas of the UE transmit separate pilots occasionally, and the BS determines how to weight the antenna channels when the same pilot is transmitted by two or more antennas. A closed loop is where one or more feedback loops are present between the output (e.g., the BS or UE) and input (e.g., the UE or BS) of the system.

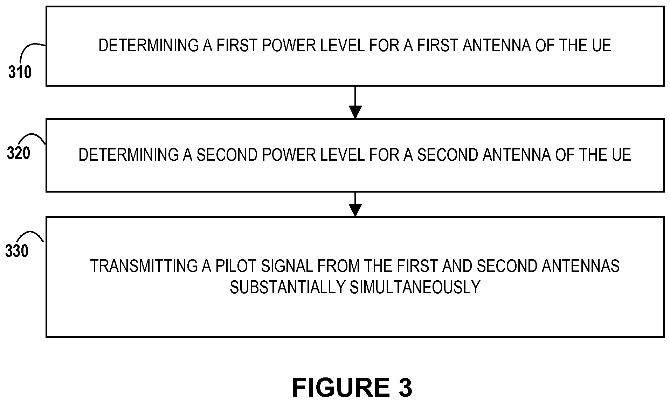

Referring now to Figure 3, Figure 3 presents an exemplary method according to embodiments of the invention. At block 310, the method comprises determining a first power level for a first antenna of the UE. At block 320, the method comprises determining a second power level for a second antenna of the UE. In some embodiments, a power ratio is defined by the first power level and the second power level. At block 330, the method comprises transmitting a pilot signal from the first and second antennas substantially simultaneously, wherein the pilot signal is transmitted from the first antenna at the first power level and the pilot signal is transmitted from the second antenna at the second power level.

In some embodiments, the UE determines an amplitude balance (or power balance) and a phase offset of the first antenna and the second antenna independently of the BS. In other embodiments, the UE is involved in determining the amplitude balance and the phase offset. The UE determines an amplitude balance and a phase offset by monitoring a power setting specified by the BS. The UE transmits a first pilot signal using the first antenna and a second pilot signal using the second antenna. The BS determines the first power level based on the first pilot signal and the second power level based on the second pilot signal. The BS transmits the first power level and the second power level to the UE.

The invention is not limited to any particular types of devices for the UE and/or BS. Examples of devices include mobile phones or other mobile computing devices, mobile televisions, laptop computers, smart screens, tablet computers or tablets, portable desktop computers, e-readers, scanners, portable media devices, gaming devices, cameras or other image-capturing devices, headgear, eyewear, watches, bands (e.g., wristbands) or other wearable devices, or other portable computing or non-computing devices.

Each UE and/or BS comprises a communication interface, a processor, a memory, and a module stored in the memory, executable by the processor, and configured to perform the various processes described herein. Each communication interface described herein enables communication with other systems. For example, the communication interface comprises at least one antenna.

Each processor described herein generally includes circuitry for implementing audio, visual, and/or logic functions. For example, the processor may include a digital signal processor device, a microprocessor device, and various analog-to-digital converters, digital-to-analog converters, and other support circuits. Control and signal processing functions of the system in which the processor resides may be allocated between these devices according to their respective capabilities. The processor may also include functionality to operate one or more software programs based at least partially on computer-executable program code portions thereof, which may be stored, for example, in a memory.

Each memory may include any computer-readable medium. For example, memory may include volatile memory, such as volatile random access memory ("RAM") having a cache area for the temporary storage of data. Memory may also include non-volatile memory, which may be embedded and/or may be removable. The non-volatile memory may additionally or alternatively include an EEPROM, flash memory, and/or the like. The memory may store any one or more of pieces of information and data used by the system in which it resides to implement the functions of that system.

The various features described with respect to any embodiments described herein are applicable to any of the other embodiments described herein. As used herein, the terms data and information may be used interchangeably. Although many embodiments of the present invention have just been described above, the present invention may be embodied in many different forms and should not be construed as limited to the embodiments set forth herein; rather, these embodiments are provided so that this disclosure will satisfy applicable legal requirements. Also, it will be understood that, where possible, any of the advantages, features, functions, devices, and/or operational aspects of any of the embodiments of the present invention described and/or contemplated herein may be included in any of the other embodiments of the present invention described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more," even though the phrase "one or more" or "at least one" is also used herein. Like numbers refer to like elements throughout.

As will be appreciated by one of ordinary skill in the art in view of this disclosure, the present invention may include and/or be embodied as an apparatus (including, for example, a system, machine, device, computer program product, and/or the like), as a method (including, for example, a business method, computer-implemented process, and/or the like), or as any combination of the foregoing. Accordingly, embodiments of the present invention may take the form of an entirely business method embodiment, an entirely software embodiment (including firmware, resident software, micro-code, stored procedures, etc.), an entirely hardware embodiment, or an embodiment combining business method, software, and hardware aspects that may generally be referred to herein as a "system." Furthermore, embodiments of the present invention may take the form of a computer program product that includes a computer-readable storage medium having one or more computer-executable program code portions stored therein. As used herein, a processor, which may include one or more processors, may be "configured to" perform a certain function in a variety of ways, including, for example, by having one or more general-purpose circuits perform the function by executing one or more computer-executable program code portions embodied in a computer-readable medium, and/or by having one or more application-specific circuits perform the function.

It will be understood that any suitable computer-readable medium may be utilized. The computer-readable medium may include, but is not limited to, a non-transitory computer-readable medium, such as a tangible electronic, magnetic, optical, electromagnetic, infrared, and/or semiconductor system, device, and/or other apparatus. For example, in some embodiments, the non-transitory computer-readable medium includes a tangible medium such as a portable computer diskette, a hard disk, a random access memory ("RAM"), a read-only memory ("ROM"), an erasable programmable read-only memory ("EPROM" or "Flash memory"), a compact disc read-only memory ("CD-ROM"), and/or some other tangible optical and/or magnetic storage device. In other embodiments of the present invention, however, the computer-readable medium may be transitory, such as, for example, a propagation signal including computer-executable program code portions embodied therein.

One or more computer-executable program code portions for carrying out operations of the present invention may include object-oriented, scripted, and/or unscripted programming languages, such as, for example, Java, Perl, Smalltalk, C++, SAS, SQL, Python, Objective C, JavaScript, and/or the like. In some embodiments, the one or more computer-executable program code portions for carrying out operations of embodiments of the present invention are written in conventional procedural programming languages, such as the "C" programming languages and/or similar programming languages. The computer program code may alternatively or additionally be written in one or more multi-paradigm programming languages, such as, for example, F#.

Some embodiments of the present invention are described herein with reference to flowchart illustrations and/or block diagrams of apparatus and/or methods. It will be understood that each block included in the flowchart illustrations and/or block diagrams, and/or combinations of blocks included in the flowchart illustrations and/or block diagrams, may be implemented by one or more computer-executable program code portions. These one or more computer-executable program code portions may be provided to a processor of a general purpose computer, special purpose computer, and/or some other programmable information processing apparatus in order to produce a particular machine, such that the one or more computer-executable program code portions, which execute via the processor of the computer and/or other programmable information processing apparatus, create mechanisms for implementing the steps and/or functions represented by the flowchart(s) and/or block diagram block(s).

The one or more computer-executable program code portions may be stored in a transitory and/or non-transitory computer-readable medium (e.g., a memory, etc.) that can direct, instruct, and/or cause a computer and/or other programmable information processing apparatus to function in a particular manner, such that the computer-executable program code portions stored in the computer-readable medium produce an article of manufacture including instruction mechanisms which implement the steps and/or functions specified in the flowchart(s) and/or block diagram block(s).

The one or more computer-executable program code portions may also be loaded onto a computer and/or other programmable information processing apparatus to cause a series of operational steps to be performed on the computer and/or other programmable apparatus. In some embodiments, this produces a computer-implemented process such that the one or more computer-executable program code portions which execute on the computer and/or other programmable apparatus provide operational steps to implement the steps specified in the flowchart(s) and/or the functions specified in the block diagram block(s). Alternatively, computer-implemented steps may be combined with, and/or replaced with, operator- and/or human-implemented steps in order to carry out an embodiment of the present invention.

While certain exemplary embodiments have been described and shown in the accompanying drawings, it is to be understood that such embodiments are merely illustrative of and not restrictive on the broad invention, and that this invention not be limited to the specific constructions and arrangements shown and described, since various other changes, combinations, omissions, modifications and substitutions, in addition to those set forth in the above paragraphs, are possible. Those skilled in the art will appreciate that various adaptations, modifications, and combinations of the just described embodiments can be configured without departing from the scope of the invention. Therefore, it is to be understood that, within the scope of the appended claims, the invention may be practiced other than as specifically described herein.

## Claims

1. A method for optimizing a wireless channel between a user equipment, UE, (101), and a base station, BS, (103), the method comprising:
determining, at the UE (101), a power ratio between a first antenna and a second antenna of the UE (101) for transmission of a pilot signal, wherein the power ratio is defined by a first power level for the first antenna of the UE (101) and a second power level for the second antenna of the UE (101), wherein the power ratio is determined independently of the BS (103);
determining, at the UE (101), a phase offset of the first antenna and the second antenna for the transmission of the pilot
signal from the first antenna and the second antenna, wherein the phase offset is defined by a first relative phase for the transmission of the pilot signal from the first antenna and a second relative phase for the transmission of the pilot signal from the second antenna, wherein the phase offset is determined independently of the BS (103); and
transmitting the pilot signal from the first and second antennas substantially simultaneously, wherein the pilot signal is transmitted from the first antenna at the first power level using the first relative phase and the pilot signal is transmitted from the second antenna at the second power level using the second relative phase,
wherein the method is defined as an open-loop optimization by the UE.

2. The method of claim 1, wherein the UE (101) transmits a first pilot signal using the first antenna and a second pilot signal using the second antenna.

3. An apparatus for optimizing a wireless channel between a user equipment, UE, (101) and a base station, BS, (103), the apparatus comprising:
a memory;
a processor; and
a module for open-loop optimization by the UE stored in the memory, executable by the processor, and configured to:
determine, at the UE (101), a power ratio between a first antenna and a second antenna of the UE (101) for transmission of a pilot signal, wherein the power ratio is defined by a first power level for the first antenna of the UE (101) and a second power level for the second antenna of the UE (101), wherein the power ratio is determined independently of the BS (103);
determine, at the UE (101), a phase offset of the first antenna and the second antenna for the transmission of the pilot signal from the first antenna and the second antenna, wherein the phase offset is defined by a first relative phase for the transmission of the pilot signal from the first antenna and a second relative phase for the transmission of the pilot signal from the second antenna, wherein the phase offset is determined independently of the BS (103); and
transmit the pilot signal from the first and second antennas substantially simultaneously, wherein the pilot signal is transmitted from the first antenna at the first power level using the first relative phase and the pilot signal is transmitted from the second antenna at the second power level using the second relative phase.

4. The apparatus of any one of claims 3, wherein the UE (101) transmits a first pilot signal using the first antenna and a second pilot signal using the second antenna.

5. A computer program product for optimizing a wireless channel between a user equipment, UE, (101), and a base station, BS, (103), the computer program product comprising:
a non-transitory computer-readable medium comprising a set of codes for open loop optimization by the UE
causing a computer to:
determine, at the UE (101), a power ratio between a first antenna and a second antenna of the UE (101) for transmission of a pilot signal, wherein the power ratio is defined by a first power level for the first antenna of the UE (101) and a second power level for the second antenna of the UE (101), wherein the power ratio is determined independently of the BS (103);
determine, at the UE (101), a phase offset of the first antenna and the second antenna for the transmission of the pilot signal from the first antenna and the second antenna, wherein the phase offset is defined by a first relative phase for the transmission of the pilot signal from the first antenna and a second relative phase for the transmission of the pilot signal from the second antenna, wherein the phase offset is determined independently of the BS (103);
and
transmit the pilot signal from the first and second antennas substantially simultaneously, wherein the pilot signal is transmitted from the first antenna at the first power level using the first relative phase and the pilot signal is transmitted from the second antenna at the second power level using the second relative phase.

6. The computer program product of claim 5, wherein the UE (101) transmits a first pilot signal using the first antenna and a second pilot signal using the second antenna.

## Patentansprüche

1. Verfahren zum Optimieren eines drahtlosen Kanals zwischen einem Benutzergerät, UE, (101) und einer Basisstation, BS, (103), wobei das Verfahren umfasst:
Bestimmen, an dem UE (101), eines Leistungsverhältnisses zwischen einer ersten Antenne und einer zweiten Antenne des UE (101) für eine Übertragung eines Pilotsignals, wobei das Leistungsverhältnis durch einen ersten Leistungspegel für die erste Antenne des UE (101) und einen zweiten Leistungspegel für die zweite Antenne des UE (101) definiert ist, wobei das Leistungsverhältnis unabhängig von der BS (103) bestimmt wird;
Bestimmen, an dem UE (101), eines Phasenversatzes der ersten Antenne und der zweiten Antenne für die Übertragung des Pilotsignals von der ersten Antenne und der zweiten Antenne, wobei der Phasenversatz durch eine erste relative Phase für die Übertragung des Pilotsignals von der ersten Antenne und eine zweite relative Phase für die Übertragung des Pilotsignals von der zweiten Antenne definiert ist, wobei der Phasenversatz unabhängig von der BS (103) bestimmt wird; und
Übertragen des Pilotsignals von der ersten und zweiten Antenne im Wesentlichen gleichzeitig, wobei das Pilotsignal von der ersten Antenne auf dem ersten Leistungspegel unter Verwendung der ersten relativen Phase übertragen wird und das Pilotsignal von der zweiten Antenne auf dem zweiten Leistungspegel unter Verwendung der zweiten relativen Phase übertragen wird, wobei das Verfahren als eine Open-Loop-Optimierung durch das UE definiert ist.

2. Verfahren nach Anspruch 1, wobei das UE (101) ein erstes Pilotsignal unter Verwendung der ersten Antenne und
ein zweites Pilotsignal unter Verwendung der zweiten Antenne überträgt.

3. Vorrichtung zur Optimierung eines drahtlosen Kanals zwischen einem Benutzergerät, UE, (101) und einer Basisstation, BS, (103), wobei die Vorrichtung umfasst:
einen Speicher;
einen Prozessor; und
ein Modul zur Open-Loop-Optimierung durch das UE, das in dem Speicher gespeichert, vom Prozessor ausführbar und konfiguriert ist um:
an dem UE (101) ein Leistungsverhältnis zwischen einer ersten Antenne und einer zweiten Antenne des UE (101) für eine Übertragung eines Pilotsignals zu bestimmen, wobei das Leistungsverhältnis durch einen ersten Leistungspegel für die erste Antenne des UE (101) und einen zweiten Leistungspegel für die zweite Antenne des UE (101) definiert ist, wobei das Leistungsverhältnis unabhängig von der BS (103) bestimmt wird;
an dem UE (101) einen Phasenversatz der ersten Antenne und der zweiten Antenne für die Übertragung des Pilotsignals von der ersten Antenne und der zweiten Antenne zu bestimmen, wobei der Phasenversatz durch eine erste relative Phase für die Übertragung des Pilotsignals von der ersten Antenne und eine zweite relative Phase für die Übertragung des Pilotsignals von der zweiten Antenne definiert ist, wobei der Phasenversatz unabhängig von der BS (103) bestimmt wird; und
das Pilotsignal von der ersten und zweiten Antenne im Wesentlichen gleichzeitig zu übertragen, wobei das Pilotsignal von der ersten Antenne auf dem ersten Leistungspegel unter Verwendung der ersten relativen Phase übertragen wird und das Pilotsignal von der zweiten Antenne auf dem zweiten Leistungspegel unter Verwendung der zweiten relativen Phase übertragen wird.

4. Vorrichtung nach Anspruch 3, wobei das UE (101) ein erstes Pilotsignal unter Verwendung der ersten Antenne und ein zweites Pilotsignal unter Verwendung der zweiten Antenne überträgt.

5. Computerprogrammprodukt zum Optimieren eines drahtlosen Kanals zwischen einem Benutzergerät, UE, (101) und einer Basisstation, BS (103), wobei das Computerprogrammprodukt umfasst:
ein nichtflüchtiges, computerlesbares Medium, umfassend einen Satz von Codes zur Open-Loop-Optimierung durch das UE,
das einen Computer veranlasst um
an dem UE (101) ein Leistungsverhältnis zwischen einer ersten Antenne und einer zweiten Antenne des UE (101) für eine Übertragung eines Pilotsignals zu bestimmen, wobei das Leistungsverhältnis durch einen ersten Leistungspegel für die erste Antenne des UE (101) und einen zweiten Leistungspegel für die zweite Antenne der UE (101) definiert ist, wobei das Leistungsverhältnis unabhängig von der BS (103) bestimmt wird;
an dem UE (101) einen Phasenversatz der ersten Antenne und der zweiten Antenne zur Übertragung des Pilotsignals von der ersten Antenne und der zweiten Antenne zu bestimmen, wobei der Phasenversatz durch eine erste relative Phase für die Übertragung des Pilotsignals von der ersten Antenne und eine zweite relative Phase für die Übertragung des Pilotsignals von der zweiten Antenne definiert ist, wobei der Phasenversatz unabhängig von der BS (103) bestimmt wird;
und
das Pilotsignal von der ersten und zweiten Antenne im Wesentlichen gleichzeitig zu übertragen, wobei das Pilotsignal von der ersten Antenne auf dem ersten Leistungspegel unter Verwendung der ersten relativen Phase übertragen wird und das Pilotsignal von der zweiten Antenne auf dem zweiten Leistungspegel unter Verwendung der zweiten relativen Phase übertragen wird.

6. Computerprogrammprodukt nach Anspruch 5, wobei das UE (101) ein erstes Pilotsignal unter Verwendung der ersten Antenne und ein zweites Pilotsignal unter Verwendung der zweiten Antenne überträgt.

## Revendications

1. Procédé pour optimiser un canal sans fil entre un équipement d'utilisateur, UE, (101), et une station de base, BS, (103), le procédé comprenant les étapes consistant à :
déterminer, au niveau de l'UE (101), un rapport de puissance entre une première antenne et une deuxième antenne de l'UE (101) pour la transmission d'un signal pilote, dans lequel le rapport de puissance est défini par un premier niveau de puissance pour la première antenne de l'UE (101) et un deuxième niveau de puissance pour la deuxième antenne de l'UE (101),
dans lequel le rapport de puissance est déterminé indépendamment de la BS (103) ;
déterminer, au niveau de l'UE (101), un déphasage de la première antenne et de la deuxième antenne pour la transmission du signal pilote à partir de la première antenne et de la deuxième antenne, dans lequel le déphasage est défini par une première phase relative pour la transmission du signal pilote à partir de la première antenne et une deuxième phase relative pour la transmission du signal pilote à partir de la deuxième antenne, dans lequel le déphasage est déterminé indépendamment de la BS (103) ; et
transmettre le signal pilote à partir des première et deuxième antennes sensiblement simultanément, dans lequel le signal pilote est transmis à partir de la première antenne au premier niveau de puissance en utilisant la première phase relative et le signal pilote est transmis à partir de la deuxième antenne au deuxième niveau de puissance en utilisant la deuxième phase relative,
dans lequel le procédé est défini en tant qu'optimisation en boucle ouverte par l'UE.

2. Procédé selon la revendication 1, dans lequel l'UE (101) transmet un premier signal pilote en utilisant la première antenne et un deuxième signal pilote en utilisant la deuxième antenne.

3. Appareil pour optimiser un canal sans fil entre un équipement d'utilisateur, UE, (101) et une station de base, BS, (103), l'appareil comprenant :
une mémoire ;
un processeur ; et
un module pour une optimisation en boucle ouverte par l'UE, mémorisé dans la mémoire, exécutable par le processeur, et configuré pour :
déterminer, au niveau de l'UE (101), un rapport de puissance entre une première antenne et une deuxième antenne de l'UE (101) pour la transmission d'un signal pilote, dans lequel le rapport de puissance est défini par un premier niveau de puissance pour la première antenne de l'UE (101) et un deuxième niveau de puissance pour la deuxième antenne de l'UE (101), dans lequel le rapport de puissance est déterminé indépendamment de la BS (103) ;
déterminer, au niveau de l'UE (101), un déphasage de la première antenne et de la deuxième antenne pour la transmission du signal pilote à partir de la première antenne et de la deuxième antenne, dans lequel le déphasage est défini par une première phase relative pour la transmission du signal pilote à partir de la première antenne et une deuxième phase relative pour la transmission du signal pilote à partir de la deuxième antenne, dans lequel le déphasage est déterminé indépendamment de la BS (103) ; et
transmettre le signal pilote à partir des première et deuxième antennes sensiblement simultanément, dans lequel le signal pilote est transmis à partir de la première antenne au premier niveau de puissance en utilisant la première phase relative et le signal pilote est transmis à partir de la deuxième antenne au deuxième niveau de puissance en utilisant la deuxième phase relative.

4. Appareil selon la revendication 3, dans lequel l'UE (101) transmet un premier signal pilote en utilisant la première antenne et un deuxième signal pilote en utilisant la deuxième antenne.

5. Produit-programme d'ordinateur pour optimiser un canal sans fil entre un équipement d'utilisateur, UE, (101), et une station de base, BS, (103), le produit-programme d'ordinateur comprenant :
un support non transitoire pouvant être lu par un ordinateur comprenant un ensemble de codes pour une optimisation en boucle ouverte par l'UE amenant un ordinateur à :
déterminer, au niveau de l'UE (101), un rapport de puissance entre une première antenne et une deuxième antenne de l'UE (101) pour la transmission d'un signal pilote, dans lequel le rapport de puissance est défini par un premier niveau de puissance pour la première antenne de l'UE (101) et un deuxième niveau de puissance pour la deuxième antenne de l'UE (101), dans lequel le rapport de puissance est déterminé indépendamment de la BS (103) ;
déterminer, au niveau de l'UE (101), un déphasage de la première antenne et de la deuxième antenne pour la transmission du signal pilote à partir de la première antenne et de la deuxième antenne, dans lequel le déphasage est défini par une première phase relative pour la transmission du signal pilote à partir de la première antenne et une deuxième phase relative pour la transmission du signal pilote à partir de la deuxième antenne, dans lequel le déphasage est déterminé indépendamment de la BS (103) ; et
transmettre le signal pilote à partir des première et deuxième antennes sensiblement simultanément, dans lequel le signal pilote est transmis à partir de la première antenne au premier niveau de puissance en utilisant la première phase relative et le signal pilote est transmis à partir de la deuxième antenne au deuxième niveau de puissance en utilisant la deuxième phase relative.

6. Produit-programme d'ordinateur selon la revendication 5, dans lequel l'UE (101) transmet un premier signal pilote en utilisant la première antenne et un deuxième signal pilote en utilisant la deuxième antenne.
